# NEW EUROPEAN PATENT SPECIFICATION

(11) **EP 1 751 395 B2**
(45) Date of publication and mention of the opposition decision: **14.03.2018**
(45) Mention of the grant of the patent: 11.02.2009
(21) Application number: 05814842.0
(22) Date of filing: 16.06.2005
(51) Int. Cl.: C09K 8/524

(54) **LOW DOSAGE NAPHTHENATE INHIBITORS**
NIEDRIGDOSIERTE NAPHTHENAT-HEMMER
INHIBITEURS DE NAPHTENATE A FAIBLE DOSAGE

(30) Priority: 16.06.2004 US 869826; 17.09.2004 US 944288
(43) Date of publication of application: 14.02.2007
(73) Proprietor: Nalco Company, Sugar Land, TX 77478 (US)
(72) Inventor: UBBELS, Sen, J., NL-7491 AN Delden (NL); VENTER, Petrus Johannes, Pearland, TX 77584 (US); NACE, Vaughn, Mark, Lake Jackson, TX 77566 (US)
(74) Representative: Barton, Matthew Thomas
(86) International application number: PCT/US2005/021354
(87) International publication number: WO 2006/025912

(56) References cited:
- US-A- 2 143 991
- US-A- 4 192 767
- US-A- 5 213 691
- Dissertation von Tronfd Erik Havre, "Formation of Calcium Naphthenate in Wasser/Oil Systems, Naphthenic Acid Chemistry and Emulsion Stability"; Trondheim 2002
- SPE 74 649 (30-31 January 2002)
- SPE 80 375 (29-30 January 2003)
- SPE 74 661 (30-31 January 2002)
- NEUMÜLLER O-A.: 'Römpps Chemie-Lexikon', vol. 8TH AUFL, 1988, FRANCKH'SCHE VERLAGSHANDLUNG, STUTTGART pages 4153 - 4157
- SPE 73 930 (20-21 March 2002)
- GUILDEN W.: 'Kein Erdöl ohne die Chemie' CHEMIE IN UNSER ZEIT vol. 35, no. 2, 2001, pages 82 - 92
- Chemistry in the Oil Industry YIII, T.G. Balson, 2003
- OGDEN P.H.: 'Chemicals in the Oil Industry: Developments and Applications', 25 May 1993, THE ROYAL SOCIETY OF CHEMISTRY page 22

## Description

### BACKGROUND OF THE INVENTION

### Field of the Invention

The present invention relates to methods and compositions for inhibiting the formation of naphthenate precipitates or naphthenate-stabilized emulsions during contact between crude oil containing naphthenic acid and water containing cations.

### Description of the Related Art

Crude oil includes various high molecular weight hydrocarbon-containing compounds, frequently including naphthenic acid. Naphthenic acids are classified as carboxylic acids of the general formula R-COOH, where R represents a cyclo-aliphatic structure typically having 10 to 50 carbon atoms and 0 to 6 rings. The term "naphthenic acid" is generally used to account for carboxylic acids present in crude oil, including acyclic and aromatic acids. Naphthenic acids are found predominantly in immature biodegraded crude oils. The amount of organic acid present in crude oil is expressed by the total acid number (TAN), often in units of milligrams KOH per gram of crude. For example, crude oil produced from the North Sea, the Far East and Western Africa exhibit high TAN numbers, such as a TAN greater than one (1), including high concentrations of naphthenic acids.

One problem experienced during production of crude oils having a high TAN number, is the formation of calcium naphthenate precipitates and/or naphthenate stabilized emulsions. The ionizable carboxylic acid group present in naphthenic acids exhibits a hydrophilic nature that causes the naphthenic acid molecule to congregate at the oil-water interface. At low pH conditions, the interfacial activity of the naphthenic acids is not so problematic because the predominant species is the charge-neutral carboxylic acid. As the crude oil is produced, the pressure in the crude oil drops and carbon dioxide is lost from the solution. The loss of carbon dioxide causes the pH of the crude oil to increase and, in turn, leads to enhanced dissociation of the naphthenic acid. The naphthenates can then act as natural surfactants leading either to stabilized emulsions or solid deposits following complexation with calcium or other cations present in the aqueous phase. The naphthenate deposits can accumulate in flow-lines, heat-exchangers, oil-water separators, desalters, filters, hydro-cyclones, and other oil processing equipment.

When naphthenic acids in crude oil are combined with high-pH, highly mineralized connate or process waters, the processes that separate oil and water can experience severe problems. The neutralization products of naphthenic acids with basic ions in the water tend to form very stable water-in-oil emulsions and/or insoluble sticky calcium naphthenate deposits. The naphthenate deposits are similar in nature to lime soaps that form from fatty carboxylates and calcium chloride, sometimes known as "soap scum." These phenomena can hamper the oil production considerably and result in high treatment costs.

Existing treatments to prevent the formation of calcium naphthenate precipitates and emulsions during oil production include the injection of large volumes of acetic acid in order to decrease the pH of the oil and water phases, thus favoring naphthenic acid over the formation of naphthenate salts. However, to accomplish this task requires continuous injection of about 100 to 1000 parts per million (ppm) of acetic acid to achieve a pH below at least 6.0 and sometimes even below 5.2. However, this acid is very corrosive and presents various health, safety, and environmental issues. Furthermore, the sheer volume of acetic acid solution that is necessary represents a significant storage and supply problem, especially on offshore oil production platforms. Also, lowering the pH of the produced waters may lead-to serious internal corrosion of the crude oil processing equipment. The result is that preventing the formation of naphthenate precipitates and emulsions comes at a high cost.

Therefore, there is a need for an improved method of inhibiting the formation of naphthenate precipitates and emulsions during the production of crude oil. There is also a need for a composition or formulation that is more effective at inhibiting naphthenate precipitates and emulsions. Furthermore, there is a need for a composition that is effective in mitigating the deleterious effects of any metal naphthenate salt aggregates that do form, by acting to stabilize the crystallites and preventing further agglomeration that would lead to deposit formation. It would be desirable if the method and composition required smaller volumes of active chemical, lower dosage rates, smaller pH changes, and lower overall costs.

### SUMMARY OF THE INVENTION

The invention is defined by the claims. Any subject matter not falling within the scope of the claims is for information purposes only.

The present invention provides a method for use in oil production as disclosed in claim 1.

The cations originating from the water, such as connate water, formation water or seawater, may include an inorganic cationic species. Examples of a cationic species include from calcium cations, magnesium cations, sodium cations, or combinations thereof. The organic acid originating from the oil may include a naphthenic acid. The inhibitor compositions are suitable for use with oil having a total acid number (TAN) greater than 0.05 and even a TAN greater than 1. Preferably, the inhibitor composition is effective to inhibit formation of organic salts.

The inhibitor composition may be in the form of an acid that will reduce the dissociation of the naphthenic acid to some extent, although this is not the primary mechanism by which the inhibitor functions. Still, acidification may play a role in the overall inhibition of organic salt deposits and emulsions.

In one embodiment, the inhibitor composition inhibits the cations and organic acid, such as a naphthenic acid, from interacting along an oil-water interface, such as an oil-water emulsion. Preferably, the inhibitor composition inhibits formation of an organic salt, such as a naphthenate salt, along an oil-water interface. More specifically and preferably, the inhibitor composition inhibits naphthenate salt formation along an oil-water interface. Accordingly, the inhibitor composition may have a hydrophilic portion and an oleophilic portion. In one embodiment, the inhibitor composition includes the product formed by a reaction between phosphorus pentoxide and an alcohol.

In another embodiment, the inhibitor also acts along an oil-water interface such that any organic salt that does form will be rendered as an unstable interfacial film, after which the dispersed phase droplets will coalesce and a stable emulsion will not be formed.

In still another embodiment, the inhibitor composition can contain active material that acts as a Brønsted acid, providing protons to the oil-water medium, and thus reducing the ionization of organic acids present. This proton-active material can be in the form of a typical acid species, or can be a surfactant or hydrotrope.

The inhibitor composition may be a surfactant, such as an anionic surfactant, amphoteric surfactant, or a combination thereof. More particularly, the surfactant may be selected from phosphates, sulfates, sulfonates, sulfosuccinates, polysulfosuccinates, phenols, betaines, thiocarbamates, xanthates and combinations thereof. It is believed that these inhibitor compositions concentrate along the oil-water interface, and also incorporate into metal carboxylate salt complexes and crystals. Preferably, the inhibitor composition is characterized by an inability to form organized phases, such as when the inhibitor composition includes at least one hydrotrope. A hydrotrope is sometimes defined as having a structure that is similar to that of a surfactant, such that both hydrophobic and hydrophilic groups exist in the same molecule. For a classical hydrotrope however, the hydrophobic moiety is shorter compared with that of a surfactant. A hydrotrope may also be referred to as a type of molecule that has both surfactant-like qualities and ionic solubilizer qualities, in that it acts to stabilize other surfactants so that they will remain soluble. Hydrotropes form mixed interfaces with surfactants, and act to effectively destabilize crystalline phases brought about by physical attractions of hydrophobic and hydrophilic surfactant moieties. The hydrotropes may be in an acid form, a salt form, or a combination thereof. A preferred hydrotrope includes a compound selected from a class of materials that form a mixed interface with surfactants. A most preferred hydrotrope includes monophosphate ester, diphosphate ester, or a combination thereof. One example of a preferred inhibitor composition includes a phosphate ester having an organic side chain comprising the product formed by a reaction between a fatty acid and up to 9 moles, for example 1 to 9 moles, of ethylene-oxide, propylene-oxide, butylene-oxide, or a combination thereof.

The inhibitor compositions of the invention are preferably added at a concentration of less than 500 ppm in the mixture of oil and water, more preferably at less than 250 ppm, even more preferably less than 120 ppm, and optionally even less than 50 ppm. Optionally, the inhibitor composition may further comprise acetic acid, but preferably less than 200 ppm acetic acid. However, it is preferable to provide the inhibitor composition in the absence of acetic acid.

Preferably, the methods of the invention are characterized in that the pH of the oil and water mixture is greater than 5.2 following the addition of the inhibitor composition, more preferably greater than 6, and most preferably about 7.

The step of adding the inhibitor composition may include injecting the inhibitorcomposition downhole.

Optionally, the inhibitorcomposition may be added as the oil and water mixture is being produced from a formation. Preferably, the inhibitor composition is added before a choke, manifold, turret, or a combination thereof. The method includes, after adding the inhibitor composition, reducing the pressure to release carbon dioxide gas from the oil.

### BRIEF DESCRIPTION OF THE DRAWINGS

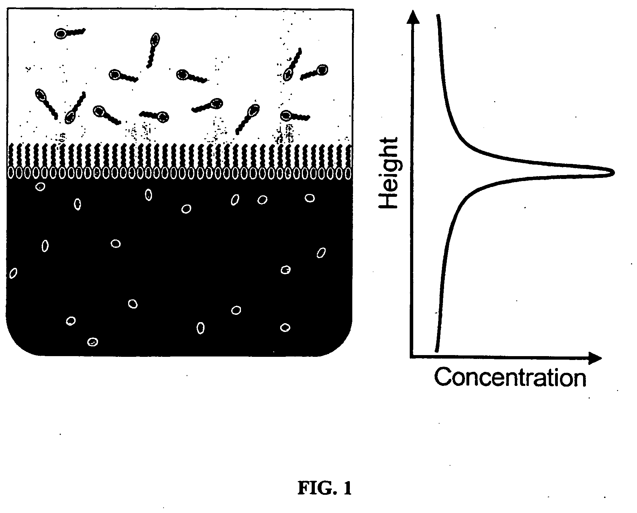

FIG. 1 is a schematic diagram showing surfactant molecules having a water-loving head and an oil-loving tail, where the molecules have self-associated and concentrated at an oil/water interface.

### DETAILED DESCRIPTION OF A PREFERRED EMBODIMENT

The present disclosure is directed to low dosage naphthenate inhibitor (LDNI) compounds and compositions including those compounds. These compounds are capable of inhibiting naphthenate salt formation, precipitation or emulsions at substantially lower dosage than with existing acetic acid practices. Preferred naphthenate inhibitor compounds include acids that are stronger than the carboxylic acids in the crude oil in order to protonate the weaker naphthenic acids. However, it is also preferred that the naphthenate inhibitor compounds are non-emulsifying. One particularly preferred class of these compounds includes hydrotropes. As used herein, the term "hydrotrope" means a compound having certain surfactant qualities that is less likely to form organized phases and therefore have a lower emulsifying tendency than many other surfactants. Accordingly, hydrotropes frequently have a hydrocarbon tail that is suitably shaped or bulky to prevent or interrupt the self organization of other surface active material. Hydrotropes may be used in their acid form or weak base salt form, but must be either water-soluble or oil-soluble. Anionic and amphoteric hydrotropes are deemed to be particularly useful in this invention.

However, it is believed that other surfactants that would not be classified as classical hydrotropes may also exhibit qualities that are beneficial in inhibiting naphthenate salt formation. These other surfactants may include both anionic surfactants and amphoteric surfactants. Examples of anionic surfactants include phosphates, phosphonates (such as R₁NR₂R₃, wherein R₁ is an organic moiety, and R₂ and R₃ are independently selected from -(CH₂P(=O)(OH)₂) or H or an organic moiety; or salts of these phosphonates, or quaternary salts of these phosphonates) acrylic acids, sulfates, sulfonates, sulfosuccinates, polysulfosuccinates, betaines, thiocarbamates, xanthates and the like. Preferred naphthenate inhibitors also exhibit low corrosivity and will be compatible with other demulsifiers. Further still, it is preferred to use naphthenate inhibitors that are environmentally friendly, such as exhibiting biodegradability, no bioaccumulation, as well as low toxicity to marine species. Specific examples of suitable surfactants include, without limitation, phenols, carboxylic acids, betaines, thiocarbamates, xanthates, phosphonates, phosphate esters, sulfates, sulfonates, and sulfosuccinates and derivatives of these surfactants. Specific examples of phosphonates include mono-amine, di-amine, tri-amine, tetra-amine, penta-amine and other poly-amine phosphonates, as well as mono-alkyl, di-alkyl, and tri-alkyl phosphonates. Specific examples of acrylic acids include surface-active modified polyacrylic acids, as well as polyalkyl sulfosuccinates.

Preferred naphthenate inhibitor compositions include phosphate esters and sulphonic acids. Presently, the most preferred inhibitor composition includes a monophosphate ester, a diphosphate ester, or a combination thereof. These phosphate esters have been successfully used and shown to be approximately twenty times as effective as acetic acid per unit volume of inhibitor. Other successfully used or tested compositions include sulfonates, sulfosuccinates and ethoxylated fatty acids in combination with polymeric surfactants like poly-glycol esters, poly-imines and epon-resins.

Naphthenate inhibitor compositions comprising a phosphate ester may be made or obtained in various ways. For example, phosphate esters may be prepared from phosphorus chloride (PCl₃) or polyphosphoric acid. However, the presently most preferred method of forming the phosphate ester-based naphthenate inhibitors includes the reaction of phosphorus pentoxide with alcohols (ROH) to generate the mono-alkyl and di-alkyl (aryl or mixed alkyl/aryl) phosphonic acid. Alcohols (ROH) of the class alkyl, aryl substituted aryl having linear, branched, cyclic and substituted cyclic structures including their oxyalkylated derivatives containing 1 to 9 moles ethylene oxide (EO), propylene oxide (PO) or butylene oxide (BO) and/or mixtures thereof, in block or random form, per hydroxyl can be beneficial in producing naphthenate salt inhibitors. This reaction yields one mole of monophosphate ester (R-O-P(=O)(OH)₂) and one mole of diphosphate ester ((R-O)₂-P(=O)(OH)). This reaction product can be used as a naphthenate inhibitor without further modification or purification of the active ingredients.

Hydrotropes and suitable surfactants of the present invention are preferably added to production or processing streams containing oil and water in an amount effective to inhibit naphthenate salt formation, precipitation or emulsions. The naphthenate inhibitor compositions are effective at concentrations less than the dose rate required of acetic acid. While it is recognized that the necessary dosage of a naphthenate inhibitor will vary based on the composition of the crude oil and the composition of the connate or process water, it is generally unnecessary to use more than 200 ppm of the present naphthenate inhibitors even in the absence of acetic acid. A preferred naphthenate inhibitor dosage is 100 ppm or less based on total fluids. The naphthenate inhibitors are also used at concentrations of 50 ppm or less in combination with a reduced dosage of acetic acid. In fact, a concentration of about 40 ppm of a mixture of monophosphate ester and diphosphate ester has been shown to be effective in combination with acetic acid, while reducing the typical acetic acid dosage by about 70% to 100 ppm or less.

The present invention provides a method according to claim 1.

The method includes adding an effective amount of a naphthenate inhibitor into the production fluids for contact with mixtures of oil and water in the formation, the production equipment, or processing systems. It is believed that the naphthenate inhibitors exhibit surface-active properties that cause the inhibitors to self-associate and concentrate in a layer at the oil-water interface. Having the naphthenate inhibitors at the oil-water interface serves to prevent interactions between organic acids in the oil phase with monovalent, di-valent and/or poly-valent cations or cation complexes in the water. It is believed that the physical positioning and geometry of the naphthenate inhibitor composition blocks formation and/or limits growth of naphthenate salts. However, it is preferred that the naphthenate inhibitors also do not cause formation of stable oil-in-water and water-in-oil emulsions.

The present naphthenate inhibitor compounds provide the advantages of using lower dosages of chemicals and avoiding the corrosivity that comes with operating at lower pH. Improvements in inhibitor logistics and reduction of treatment costs are significant.

The naphthenate inhibitors are dosed in the oil/water mixtures (emulsions) as the mixtures are produced from the formation. The best dosage point or injection point is just before the pressure is released from the fluids, such as just before a choke, the manifold, the turret or any other place where the pressure drops significantly. Also, it is possible to successfully inject or provide a naphthenate inhibitor at a point immediately downstream of fluid pressure release. Naphthenate deposits or emulsions are typically formed after the pressure on the fluid is released from the system, because carbon dioxide gas (CO₂) will escape from the fluid at reduced pressures, resulting in an increased pH and the formation of naphthenate salts. Preferably, the naphthenate inhibitor is injected into the fluid prior to formation of the naphthenate salts, although injection following naphthenate salt formation may also be successful.

The compound has been described as a low dosage naphthenate inhibitor (LDNI), but the compounds are believed to have equal or similar utility for inhibiting the formation of other insoluble organic salts or soaps of organic acids present in oil. The term "soap" is classically defined as any salt of a fatty acid. Such an organic acid can be varied in its functionality and carbon chain length, examples of which include, but are not limited to, the sodium salt of stearic acid and the sodium salt of oleic acid.

Surfactants, or surface-active chemicals, comprise generally contrasting character in the same molecule. FIG. 1 is a schematic diagram showing surfactant molecules having a water-loving head and an oil-loving tail, where the molecules have self-associated and concentrated at an oil/water interface. Careful measurement of surfactant monomer populations below the critical micelle concentration shows that the concentration of surfactant at the oil/water interface is greater than in either the bulk oil or the bulk water phases. Of course, as the bulk concentration of surfactant increases, approaching and exceeding the critical micelle concentration, surfactant aggregates of various shapes and sizes can form, and the bulk concentration may exceed the concentration at the interface. Nevertheless, the surfactant interface will remain as a recognizable structural and chemical line of demarcation between the aqueous and oil phases. The nature of the water-loving head group of the surfactant can be engineered to determine its interaction with species in the aqueous environment. The nature of the tail can also be engineered to impart particular desired properties. Combining these two parameters carefully provides a material having a greater propensity to concentrate itself at interfaces. These low dosage naphthenate inhibitors are far more effective than mere acidification for inhibiting naphthenic acids from interacting with cations in the water, and also for inhibiting the formation of problematic insoluble aggregates as the metal salts. Thus, it is possible to design low dosage naphthenate inhibitors that can inhibit solid calcium naphthenate deposit formation, prevent the formation of insoluble organic salts and soaps and/or prevent the stabilization of emulsions. Low dosage naphthenate inhibitors are far more cost-effective than conventional treatment programs, since these low dosage naphthenate inhibitors self associate in high concentrations at water/oil interfaces to combat the formation and effects of organic acid-derived salts and soaps that can lead to deposits or stabilization of emulsions.

The fact that the bulk concentration of these low dosage naphthenate inhibitors can be very low, yet provide a sufficient interfacial concentration of the inhibitors to be effective, reduces the extent to which the bulk pH is typically lowered in comparison to the use of conventional calcium naphthenate treatment programs, such as large additions of acetic acid. However, there may be circumstances in which localized surfactant aggregates such as micelles, admicelles, and other self-assembled species or phases are present in the continuous or dispersed phases of the system due to electrolyte effects, pressure, temperature, presence of dissolved gas, and the like.

While the method of the invention is not so limited, it is believed that the inhibitor compositions are attracted to the oil-water interface (See Fig. 1), and may be described in terms of a monolayer concentration or surface excess concentration, such as in units of moles per square centimeter of oil-water interface, as an alternative to bulk concentration, which is typically reported as a molar concentration. A preferred surface excess concentration is between about 0.5 x 10⁻¹⁰ and about 7.5 x 10⁻¹⁰ moles per square centimeter. However, since the actual surface area of the oil-water interface is rarely known and typically dynamic overtime, it may be more practical to quantify the amount of inhibitor used is terms of a dosage rate, i.e., the amount of inhibitor used per unit volume of the oil-water mixture. For example, the inhibitor may be added to a production fluid having a mixture of oil and water at a dosage rate of between 25 and 1000 ppm inhibitor. However, in accordance with the teaching of this invention, it should be recognized that the dosage rate will be unlikely to ultimately result in a bulk concentration of the same magnitude, since the inhibitor will preferentially concentrate at oil-water interfaces.

The surfactant molecules depicted in Fig. 1 are not limited to classical surfactant structures, but can also consist of classical hydrotrope molecules. Furthermore, the interface can be a mixed system of surfactant and hydrotrope molecules. Still further, the interface can be a mixed system of surfactant, hydrotrope, and organic acid metal ion salts. Within the scope of this invention, the interface can be described as either: a barrier that prevents organic acids and ionized organic acids in the oil phase from combining with metal ions in the aqueous phase; a destabilized liquid particle interface, which when two particles collide, they will coalesce and become non-emulsified due to the destabilized interface; or a combination thereof.

It should be recognized that the discussion of an oil-water interface throughout this document, include oil-water interfaces of various types, geometries and configurations, specifically including water-in-oil emulsions, oil-in-water emulsions, oil-in-water-in-oil emulsions, water-in-oil-in-water emulsions, microemulsified systems, and any other emulsion systems or interfaces recognized now or discovered in the future. The invention is not limited to an oil-water interface of any particular type, geometry or configuration. Furthermore, the examples that follow should not be taken to limit the scope of the invention, but merely represent specific applications of the invention.

### EXAMPLES

### Example 1

A solution was prepared as a surrogate for connate water by combining 1% calcium chloride and 2.5% sodium chloride in water and adjusting the pH to 8. Another solution was prepared as a surrogate for crude oil by combining 1% naphthenic acid in aliphatic hydrocarbons. 50 ml of each solution was combined and shaken for five minutes. Upon standing, a thick oil-in-water emulsion was observed, apparently stabilized against droplet coalescence by a layer of calcium naphthenate at the interface of each droplet.

### Example 2

A connate water surrogate solution and a crude oil surrogate solution were prepared as described in Example 1. 50 ml of each solution was combined. However, before shaking, 500 ppm of acetic acid was added to the combination of surrogate solutions. All of the fluids were then shaken together for five minutes. Upon standing, the fluids separated easily with no apparent emulsions or calcium naphthenate solids. The pH was measured at 5.2.

### Example 3

A connate water surrogate solution and a crude oil surrogate solution were prepared as described in Example 1. 50 ml of each solution was combined. However, before shaking, 40 ppm of a mixture of monophosphate ester and diphosphate ester and 100 ppm of acetic acid were added to the combination of surrogate solutions. All of the fluids were then shaken together for five minutes. Upon standing, the fluids separated easily with no apparent emulsions or calcium naphthenate solids. The pH was measured at 7.0.

### Example 4

A connate water surrogate solution and a crude oil surrogate solution were prepared as described in Example 1. 50 ml of each solution was combined. However, before shaking, 100 ppm of a mixture of monophosphate ester and diphosphate ester was added to the combination of surrogate solutions. All of the fluids were then shaken together for five minutes. Upon standing, the fluids separated easily with no apparent emulsions or calcium naphthenate solids. The pH was measured at 7.0.

### Example 5

A naphthenate salt inhibitor solution containing a phosphate ester was prepared. A linear fatty alcohol having 9 to 11 carbon atoms was reacted with ethylene oxide at molar ratios of 9, 6, and 3, respectively. The three resulting reaction products were then further reacted with phosphorus pentoxide at a molar ratio of about 0.5. The final products were believed to each contain a mixture of monophosphate ester and diphosphate ester, albeit having different side chain lengths. Each of the three products were shaken at 50 ppm concentration for 5 minutes with 50 ml of the connate water surrogate and 50 ml of the crude oil surrogate described in Example 1. Upon standing, each of the three bottles showed no calcium naphthenate solids. It was noticed that the alkyl groups with increasing oxide content tended to create increased quantities of emulsion. The pH was greater than 6.

### Example 6

A naphthenate salt inhibitor solution containing a phosphate ester was prepared. 2-ethyl hexanol was reacted with phosphorus pentoxide at a molar ratio of about 0.5. The final product was believed to contain a mixture of monophosphate ester and diphosphate ester. The product was shaken at a concentration of 50 ppm for 5 minutes with 50 ml of the connate water surrogate and 50 ml of the crude oil surrogate described in Example 1. Upon standing, the bottle showed no calcium naphthenate solids and no evidence of emulsions. The pH was greater than 6.

### Example 7

A blend of a naphthenate inhibitor and a demulsifier was prepared. C4 plus C8 mono- and di-phosphate esters were prepared by reaction with 0 to 6 moles of ethylene oxide and blended in a 1:1 ratio with a poly-imine alkoxylate base 1012 (an EPON resin demulsifier). The blend was mixed into an aromatic solvent to make a 30% active solution.

Off-shore crude oil that had passed through a long pipeline was found to contain 1 to 3% water in an emulsion stabilized by naphthenates. Treatment of the crude with a demulsifier alone, such as 50% active amine alkoxylates without the naphthenate inhibitors, resulted in large remaining slop layers that required additional treatment.

Off-shore crude oil that had passed through a long pipeline was found to contain 1 to 3% water in an emulsion stabilized by naphthenates. Treatment of the crude with a demulsifier alone, such as 50% active amine alkoxylates without the naphthenate inhibitors, resulted in large remaining slop layers that required additional treatment.

Another amount of the same crude was then treated with 30 ppm of the inhibitor/demulsifier blend solution. Following treatment, the water was separated in about 30 minutes from in-line separators leaving the crude with less than 0.5% water. Further dehydration resulted in the crude having less than 0.05% water and a sharp interface. Consequently, hardly any slops were produced.

### Example 8

A blend of a naphthenate inhibitor and a demulsifier was prepared. C4 plus C8 mono- and di-phosphate esters were prepared by reaction with 0 to 6 moles of ethylene oxide and blended in a 9:1 ratio with a reaction product of polypropylene glycol and bisphenol diglycidal ether (an EPON resin demulsifier). The inhibitor/demulsifier blend was mixed into an aromatic solvent to make a 30% active solution.

Off-shore crude containing 35% emulsified water and having a pH of 8 was treated with conventional demulsifiers, such as poly ethers, poly-esters, or alkyl phenol resins oxyalkylates. The demulsifier-containing crude was then passed through a long pipeline. Following removal from the pipeline, these conventional demulsifiers had reduced the strong naphthenate stabilized emulsion to about 10% of the volume of the settling tanks. Using further conventional techniques, this strong emulsion then required treatment with acetic acid and high temperatures.

A separate quantity of the same demulsifier-containing crude was then treated upon removal from the pipeline with 25 ppm of the inhibitor/demulsifier blend solution. This solution reduced the amount of naphthenate stabilized emulsion from 10% incoming from the pipeline to about 2 to 4% in the settling tanks. Use of the inhibitor/demulsifier blend reduced the cost of the treatment by about 70%.

### Example 9

A blend having two naphthenate inhibitors and one demulsifier was prepared. The first inhibitor was a C13 phosphate ester with 0 to 6 moles EO. The second inhibitor was neutralized dodecylbenzene sulphonic acid. The demulsifier was nonylphenol formaldehyde resin alkoxylated with EO and PO. These three ingredients were blended in a ratio of 1:3:6, in the order stated. The 1:3:6 blend of inhibitors and demulsifiers was then mixed into an aromatic solvent to make a 40% active solution.

Crude oil from a production platform contained about 30% naphthenate stabilized, emulsified water. Using only the demulsifier, the crude oil was passed through the 1^{st} stage oil/water/gas separator without hardly any water separation. Accordingly, it was necessary to add 200 ppm of acetic acid to the crude oil in the second stage separator in order to break the remaining emulsion.

A separate amount of the same crude oil containing 30% naphthenate stabilized, emulsified water was treated with 50 ppm of the 1:3:6 blend of inhibitors and demulsifiers in the first stage separator. The blend broke the emulsion down to below 3% and consequently the injection of the corrosive acetic acid was stopped.

The term "inhibit" as used herein means to restrain from full and free occurrence of some act or event, and is not limited to a definite and known degree of restraint. Accordingly, it should be recognized that the use of a composition to "inhibit" interaction between cations and organic acids does not mean that a given amount of the composition will necessarily produce a direct, measurable and known change in the interaction, since other factors may change in a manner that offsets the use of the composition. For example, a crude oil having a low TAN number, such as less than 0.3, or a water stream having a low concentration of calcium or magnesium ions may have little tendency to interact and form naphthenate salts even without use of an inhibitor composition. By contrast, a crude oil having a high TAN number and water having a high calcium or magnesium ion concentration may produce a significant amount of precipitates or emulsions. While the use of an inhibitor composition will reduce the degree of formation of naphthenate salts and the resulting precipitates or emulsions, the naphthenate salt concentration may still be higher than in the production fluids of low TAN crude. Still, the naphthenate salt-content in the production fluid of a high TAN crude oil will be inhibited, or any adventitious salts that do form will be mitigated, with use of an inhibitor composition relative to the naphthenate salt-content in the production fluid of the same crude oil without an inhibitor composition.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. For example, the phrase "solution comprising a hydrocarbon-containing compound" should be read to describe a solution having one or more hydrocarbon-containing compound. The term "one" or "single" may be used to indicate that one and only one of something is intended. Similarly, other specific integer values, such as "two," may be used when a specific number of things is intended. The terms "preferably," "preferred," "prefer," "optionally," "may," and similar terms are used to indicate that an item, condition or step being referred to is an optional (not required) feature of the invention.

It is intended that this foregoing description is for purposes of illustration only and should not be construed in a limiting sense. Only the language of the following claims should limit the scope of this invention.

## Claims

1. A method for use in oil production, the method comprising:
supplying at least one surface active compound into a mixture of divalent cation-containing water and organic add-containing oil at a dosage rate that is effective to self-associate at interfaces between the water and oil and inhibit formation of divalent cation salts of the organic acid,
wherein the surface active compound is at least one hydrotrope selected from a monophosphate ester, a diphosphate ester, or a combination thereof, and **characterised by** after adding the compound, reducing the pressure to release carbon dioxide gas from the oil.

2. The method of claim 1, wherein the organic acid includes naphthenic acid.

3. The method of claim 2, wherein the compound inhibits formation of naphthenate salts.

4. The method of any one of claims 1 to 3, wherein the divalent cation salts of the organic acid are capable of forming deposits, stabilizing emulsions, or a combination thereof.

5. The method of any one of the preceding claims, wherein the mixture of water and oil includes an emulsion.

6. The method of any one of the preceding claims, wherein the pH of the oil and water mixture is greater than 6.2 following the addition of the compound.

7. The method of any one of claims 1 to 5, wherein the pH of the oil and water mixture is greater than 6 following the addition of the compound.

8. The method of any one of claims 1 to 5, wherein the pH of the oil and water mixture is greater than 6.5 following the addition of the compound.

9. The method of any one of the preceding claims, wherein the compound inhibits formation of organic soap deposits or organic soap emulsions by inhibiting cations In the water from interacting with organic acid in the oil.

10. The method of any one of the preceding claims, wherein the compound inhibits the cations and organic acid from interacting along the Interface between the water and oil.

11. The method of any one of the preceding claims, wherein the water has a cation concentration of greater than 100 ppm.

12. The method of any one of the preceding claims, wherein the divalent cations are selected from calcium, magnesium, and combinations thereof.

13. The method of any one of the preceding claims, wherein the organic-acid-containing oil has a total acid number greater than 0.5.

14. The method of any one of the preceding claims, wherein the oil contains naphthenic acid at a concentration greater than 100 ppm.

15. The method of any one of the preceding claims, further comprising: producing the mixture of water and oil from a subterranean formation.

16. The method of claim 15, further comprising:
releasing carbon dioxide gas from the mixture.

17. The method of claim 15 or claim 16, further comprising:
breaking an emulsion of the water and oil.

18. The method of claim 17, further comprising:
adding an emulsion breaker composition into the produced mixture.

19. The method of claim 17 or claim 18, further comprising:
physically breaking the emulsion.

20. The method of any one of the preceding claim, wherein the compound has a hydrophilic portion and an oleophilic portion.

21. The method of any one of the preceding claims, wherein the compound includes the product formed by a reaction between phosphorus pentoxide and an alcohol.

22. The method of any one of the preceding claims, wherein the compound includes a phosphate ester having an organic side chain comprising the product formed by a reaction between a fatty acid and 1 to 9 moles of ethylene oxide, propylene oxide, butylene oxide, or combinations thereof.

23. The method of claim 22, wherein the butylene oxide is 1,2 butylene oxide.

24. The method of any one of the preceding claims, wherein the water Is selected from connate water, formation water, sea water and combinations thereof.

25. The method of any one of the preceding claims, wherein the dosage rate of the at least one surface active compound is between 10 and 1000 ppm.

26. The method of any one of claims 1 to 24, wherein the dosage rate of the at least one surface active compound is between 10 and 100 ppm.

27. The method of any one of claims 1 to 24, wherein the dosage rate of the at least one surface active compound is between 10 and 60 ppm.

28. The method of any one of claims 1 to 24, wherein the dosage rate of the at least one surface active compound is between 25 and 50 ppm.

29. The method of any one of claims 1 to 24, wherein the compound is added at a concentration of less than 500 ppm in the mixture of oil and water

30. The method of any one of claims 1 to 24, wherein the compound is added at a concentration of less than 250 ppm in the mixture of oil and water.

31. The method of any one of claims 1 to 24, wherein the compound is added at a concentration of less than 120 ppm In the mixture of oil and water.

32. The method of any one of claims 1 to therein the compound is added at a concentration of less than 100 ppm in the mixture of oil and water.

33. The method of any one of claims 1 to 24, wherein the compound is added at a concentration of less than 50 ppm in the mixture of oil and water.

34. The method of any one of claims 29 to 33, wherein the compound further comprises acetic acid.

35. The method of claim 34, wherein the compound further comprises less than 200 ppm acetic acid.

36. The method of any one of claims 29 to 33, wherein the compound is provided in the absence of acetic acid.

37. The method of claim any one of the preceding claims, wherein the step of adding the compound includes injecting the compound downhole.

38. The method of claim 1, wherein the compound is added before a choke, manifold, turret, or a combination thereof.

39. The method of any one of the preceding claims, further comprising:
adding the compound as the oil and water mixture Is being produced from a formation.

40. The method of any one of the preceding claims, wherein the oil has a TAN greater than 0.05.

41. The method of any one of the preceding claims, wherein the compound is an ; acid.

42. The method of any one of the preceding claims, wherein the compound forms a mixed interface.

43. A method according to any one of the preceding claims comprising:
supplying the compound into a conduit comprising a flowing mixture of cation-containing water and an organic-acid-containing oil.

44. The method of claim 43, wherein the conduit is selected from a drill string, casing, offshore riser, transport pipeline, processing pipe, and combinations thereof.

45. The method of claim 43 or claim 44, wherein the compound is supplied by Injection Into the conduit.

46. The method of claim 43 or 44, wherein the compound is supplied into the conduit by Injection into an oil-containing formation that is In fluid communication with the conduit

47. The method of any one of the preceding claims, wherein the mixture of water and oil is an oil production fluid.

## Patentansprüche

1. Verfahren zum Einsatz in der Erdölgewinnung, wobei das Verfahren umfasst:
das Zuführen von mindestens einer oberflächenaktiven Verbindung in eine Mischung aus bivalenten Kationen enthaltendem Wasser und organischem, säurehaltigem Öl mit einer Dosierung, die dahingehend wirksam ist, dass es zu einer Selbstassoziierung an Grenzflächen zwischen dem Wasser und dem Öl kommt und die Bildung von bivalenten Kationensalzen der organischen Säure gehemmt wird, wobei die oberflächenaktive Verbindung mindestens ein Hydrotropikum ist, das aus einem Monophosphatester, einem Diphosphatester oder einer Kombination davon ausgewählt ist, und **gekennzeichnet durch** das Verringern des Drucks zum Freisetzen von Kohlendioxidgas aus dem Öl nach dem Hinzufügen der Verbindung.

2. Verfahren gemäß Anspruch 1, bei dem die organische Säure Naphthensäure beinhaltet.

3. Verfahren gemäß Anspruch 2, bei dem die Verbindung die Bildung von Naphthenatsalzen hemmt.

4. Verfahren gemäß einem der Ansprüche 1 bis 3, bei dem die bivalenten Kationensalze der organischen Säure zur Bildung von Abscheidungen, zur Stabilisierung von Emulsionen oder einer Kombination hiervon in der Lage sind.

5. Verfahren gemäß einem der vorangehenden Ansprüche, bei dem die Mischung aus Wasser und Öl eine Emulsion beinhaltet.

6. Verfahren gemäß einem der vorangehenden Ansprüche, bei dem der pH-Wert der Öl- und Wassermischung infolge der Hinzufügung der Verbindung größer als 5,2 ist.

7. Verfahren gemäß einem der Ansprüche 1 bis 5, bei dem der pH-Wert der Öl- und Wassermischung infolge der Hinzufügung der Verbindung größer als 6 ist.

8. Verfahren gemäß einem der Ansprüche 1 bis 5, bei dem der pH-Wert der Öl- und Wassermischung infolge der Hinzufügung der Verbindung größer als 6,5 ist.

9. Verfahren gemäß einem der vorangehenden Ansprüche, bei dem die Verbindung die Bildung von organischen Seifenabscheidungen oder organischen Seifenemulsionen hemmt, indem sie Wechselwirkungen der Kationen im Wasser mit organischer Säure im Öl hemmt.

10. Verfahren gemäß einem der vorangehenden Ansprüche, bei dem die Verbindung Wechselwirkungen der Kationen und der organischen Säure an der Grenzfläche zwischen dem Wasser und dem Öl hemmt.

11. Verfahren gemäß einem der vorangehenden Ansprüche, bei dem das Wasser eine Kationenkonzentration von mehr als 100 ppm aufweist.

12. Verfahren gemäß einem der vorangehenden Ansprüche, bei dem die bivalenten Kationen ausgewählt werden aus Calcium, Magnesium und Kombinationen hiervon.

13. Verfahren gemäß einem der vorangehenden Ansprüche, bei dem das organische Säure enthaltende Öl eine Gesamtsäurezahl von mehr als 0,5 aufweist.

14. Verfahren gemäß einem der vorangehenden Ansprüche, bei dem das Öl Naphthensäure mit einer Konzentration von mehr als 100 ppm enthält.

15. Verfahren gemäß einem der vorangehenden Ansprüche, das im Weiteren umfasst:
das Herstellen der Mischung aus Wasser und Öl aus einer unterirdischen Formation.

16. Verfahren gemäß Anspruch 15, das im Weiteren umfasst:
das Freisetzen von Kohlendioxidgas aus der Mischung.

17. Verfahren gemäß Anspruch 15 oder Anspruch 16, das im Weiteren umfasst:
das Brechen einer Emulsion des Wassers und des Öls.

18. Verfahren gemäß Anspruch 17, das im Weiteren umfasst:
das Hinzufügen einer Emulsionsbrecherzusammensetzung in die hergestellte Mischung.

19. Verfahren gemäß Anspruch 17 oder Anspruch 18, das im Weiteren umfasst:
das physikalische Brechen der Emulsion.

20. Verfahren gemäß einem der vorangehenden Ansprüche, bei dem die Verbindung einen hydrophilen Teil und einen oleophilen Teil aufweist.

21. Verfahren gemäß einem der vorangehenden Ansprüche, bei dem die Verbindung das durch eine Reaktion zwischen Phosphorpentoxid und einem Alkohol gebildete Produkt beinhaltet.

22. Verfahren gemäß einem der vorangehenden Ansprüche, bei dem die Verbindung einen Phosphatester beinhaltet, der eine organische Seitenkette aufweist, die das durch eine Reaktion zwischen einer Fettsäure und 1 bis 9 Mol Ethylenoxid, Propylenoxid, Butylenoxid oder Kombinationen hiervon gebildete Produkte umfasst.

23. Verfahren gemäß Anspruch 22, bei dem das Butylenoxid 1,2-Butylenoxid ist.

24. Verfahren gemäß einem der vorangehenden Ansprüche, bei dem das Wasser ausgewählt wird aus konnatem Wasser, Formationswasser, Meerwasser und Kombinationen hiervon.

25. Verfahren gemäß einem der vorangehenden Ansprüche, bei dem die Dosierung der mindestens einen oberflächenaktiven Verbindung zwischen 10 und 1000 ppm beträgt.

26. Verfahren gemäß einem der Ansprüche 1 bis 24, bei dem die Dosierung der mindestens einen oberflächenaktiven Verbindung zwischen 10 und 100 ppm beträgt.

27. Verfahren gemäß einem der Ansprüche 1 bis 24, bei dem die Dosierung der mindestens einen oberflächenaktiven Verbindung zwischen 10 und 60 ppm beträgt.

28. Verfahren gemäß einem der Ansprüche 1 bis 24, bei dem die Dosierung der mindestens einen oberflächenaktiven Verbindung zwischen 25 und 50 ppm beträgt.

29. Verfahren gemäß einem der Ansprüche 1 bis 24, bei dem die Verbindung mit einer Konzentration von weniger als 500 ppm in die Mischung aus Öl und Wasser hinzugefügt wird.

30. Verfahren gemäß einem der Ansprüche 1 bis 24, bei dem die Verbindung mit einer Konzentration von weniger als 250 ppm in die Mischung aus Öl und Wasser hinzugefügt wird.

31. Verfahren gemäß einem der Ansprüche 1 bis 24, bei dem die Verbindung mit einer Konzentration von weniger als 120 ppm in die Mischung aus Öl und Wasser hinzugefügt wird.

32. Verfahren gemäß einem der Ansprüche 1 bis 24, bei dem die Verbindung mit einer Konzentration von weniger als 100 ppm in die Mischung aus Öl und Wasser hinzugefügt wird.

33. Verfahren gemäß einem der Ansprüche 1 bis 24, bei dem die Verbindung mit einer Konzentration von weniger als 50 ppm in die Mischung aus Öl und Wasser hinzugefügt wird.

34. Verfahren gemäß einem der Ansprüche 39 bis 33, bei dem die Verbindung im Weiteren Essigsäure umfasst.

35. Verfahren gemäß Anspruch 34, bei dem die Verbindung im Weiteren weniger als 200 ppm Essigsäure umfasst.

36. Verfahren gemäß einem der Ansprüche 29 bis 33, bei dem die Verbindung in Abwesenheit von Essigsäure bereitgestellt wird.

37. Verfahren gemäß einem der vorangehenden Ansprüche, bei dem der Schritt des Hinzufügens der Verbindung das Einspritzen der Verbindung in das Bohrloch beinhaltet.

38. Verfahren gemäß Anspruch 1, bei dem die Verbindung vor einem Drosselventil, einem Verteilungsrohr, einem Drehturm oder einer Kombination hiervon hinzugefügt wird.

39. Verfahren gemäß einem der vorangehenden Ansprüche, das im Weiteren umfasst:
das Hinzufügen der Verbindung im Zuge des Herstellens der Öl- und Wassermischung aus einer Formation.

40. Verfahren gemäß einem der vorangehenden Ansprüche, bei dem das Öl eine Gesamtsäurezahl (TAN) von mehr als 0,05 aufweist.

41. Verfahren gemäß einem der vorangehenden Ansprüche, bei dem die Verbindung eine Säure ist.

42. Verfahren gemäß einem der vorangehenden Ansprüche, bei dem die Verbindung eine gemischte Grenzfläche bildet.

43. Verfahren gemäß einem der vorangehenden Ansprüche, das umfasst:
das Zuführen der Verbindung in eine Rohrleitung, die eine strömende Mischung aus Kationen enthaltendem Wasser und eine organische Säure enthaltendem Öl umfasst.

44. Verfahren gemäß Anspruch 43, bei dem die Leitung ausgewählt wird aus einem Bohrgestänge, einem Futterrohr, einem Offshore-Steigrohr, einer Transportpipeline, einem Verarbeitungsrohr und Kombinationen hiervon.

45. Verfahren gemäß Anspruch 43 oder Anspruch 44, bei dem die Verbindung durch Einspritzen in die Leitung zugeführt wird.

46. Verfahren gemäß Anspruch 43 oder 44, bei dem die Verbindung durch Einspritzen in eine ölhaltige Formation, die sich in Fluidkommunikation mit der Leitung befindet, in die Leitung zugeführt wird.

47. Verfahren gemäß einem der vorangehenden Ansprüche, bei dem die Mischung aus Wasser und Öl ein Ölgewinnungsfluid ist.

## Revendications

1. Procédé destiné à une utilisation dans la production pétrolière, le procédé comprenant :
introduire au moins un composé tensio-actif dans un mélange d'eau à teneur en cation divalent et de pétrole à teneur en acide organique à un taux de dosage qui est efficace pour s'auto-associer à des interfaces entre l'eau et le pétrole et empêcher la formation de sels de cations divalents de l'acide organique, le composé tensio-actif étant au moins un hydrotrope choisi parmi un ester monophosphate, un ester diphosphate ou une combinaison de ceux-ci,
et **caractérisé par**, après l'addition du composé, la réduction de la pression pour libérer du pétrole le dioxyde de carbone gazeux.

2. Procédé selon la revendication 1, dans lequel l'acide organique comprend de l'acide naphténique.

3. Procédé selon la revendication 2, dans lequel le composé inhibe la formation de sels naphthénates.

4. Procédé selon l'une quelconque des revendications 1 à 3, dans lequel les sels de cations divalents de l'acide organique sont capables de former des dépôts, de stabiliser des émulsions, ou une combinaison de ceux-ci.

5. Procédé selon l'une quelconque des revendications précédentes, dans lequel le mélange d'eau et de pétrole comprend une émulsion.

6. Procédé selon l'une quelconque des revendications précédentes, dans lequel le pH du mélange de pétrole et d'eau est supérieur à 5,2 après addition du composé.

7. Procédé selon l'une quelconque des revendications 1 à 5, dans lequel le pH du mélange de pétrole et d'eau est supérieur à 6 après addition du composé.

8. Procédé selon l'une quelconque des revendications 1 à 5, dans lequel le pH du mélange de pétrole et d'eau est supérieur à 6,5 après addition du composé.

9. Procédé selon l'une quelconque des revendications précédentes, dans lequel le composé inhibe la formation de dépôts de savons organiques ou d'émulsions de savons organiques en empêchant les cations dans l'eau d'interagir avec l'acide organique dans le pétrole.

10. Procédé selon l'une quelconque des revendications précédentes, dans lequel le composé empêche les cations et l'acide organique d'interagir le long de l'interface entre l'eau et le pétrole.

11. Procédé selon l'une quelconque des revendications précédentes, dans lequel l'eau présente une concentration en cations supérieure à 100 ppm.

12. Procédé selon l'une quelconque des revendications précédentes, dans lequel les cations divalents sont choisis parmi le calcium, le magnésium, et les combinaisons de ceux-ci.

13. Procédé selon l'une quelconque des revendications précédentes, dans lequel le pétrole à teneur en acide organique présente un indice d'acide total supérieur à 0,5.

14. Procédé selon l'une quelconque des revendications précédentes, dans lequel le pétrole contient de l'acide naphténique à une concentration supérieure à 100 ppm.

15. Procédé selon l'une quelconque des revendications précédentes, comprenant en outre :
produire le mélange d'eau et de pétrole à partir d'une formation souterraine.

16. Procédé selon la revendication 15, comprenant en outre :
libérer du mélange le dioxyde de carbone gazeux.

17. Procédé selon la revendication 15 ou la revendication 16, comprenant en outre :
rompre une émulsion de l'eau et du pétrole.

18. Procédé selon la revendication 17, comprenant en outre :
ajouter une composition de rupture d'émulsion dans le mélange produit.

19. Procédé selon la revendication 17 ou la revendication 18, comprenant en outre :
rompre physiquement l'émulsion.

20. Procédé selon l'une quelconque des revendications précédentes, dans lequel le composé possède une partie hydrophile et une partie oléophile.

21. Procédé selon l'une quelconque des revendications précédentes, dans lequel le composé comprend le produit formé par une réaction entre du pentoxyde de phosphore et un alcool.

22. Procédé selon l'une quelconque des revendications précédentes, dans lequel le composé comprend un ester phosphate possédant une chaîne latérale organique comprenant le produit formé par une réaction entre un acide gras et 1 à 9 moles d'oxyde d'éthylène, d'oxyde de propylène, d'oxyde de butylène, ou des combinaisons de ceux-ci.

23. Procédé selon la revendication 22, dans lequel l'oxyde de butylène est l'oxyde de 1,2 butylène.

24. Procédé selon l'une quelconque des revendications précédentes, dans lequel l'eau est choisie parmi l'eau connée, l'eau de formation, l'eau de mer et les combinaisons de celles-ci.

25. Procédé selon l'une quelconque des revendications précédentes, dans lequel le taux de dosage dudit au moins un composé tensio-actif se situe entre 10 et 1000 ppm.

26. Procédé selon l'une quelconque des revendications 1 à 24, dans lequel le taux de dosage dudit au moins un composé tensio-actif se situe entre 10 et 100 ppm.

27. Procédé selon l'une quelconque des revendications 1 à 24, dans lequel le taux de dosage dudit au moins un composé tensio-actif se situe entre 10 et 60 ppm.

28. Procédé selon l'une quelconque des revendications 1 à 24, dans lequel le taux de dosage dudit au moins un composé tensio-actif se situe entre 25 et 50 ppm.

29. Procédé selon l'une quelconque des revendications 1 à 24, dans lequel le composé est ajouté à une concentration de moins de 500 ppm dans le mélange de pétrole et d'eau.

30. Procédé selon l'une quelconque des revendications 1 à 24, dans lequel le composé est ajouté à une concentration de moins de 250 ppm dans le mélange de pétrole et d'eau.

31. Procédé selon l'une quelconque des revendications 1 à 24, dans lequel le composé est ajouté à une concentration de moins de 120 ppm dans le mélange de pétrole et d'eau.

32. Procédé selon l'une quelconque des revendications 1 à 24, dans lequel le composé est ajouté à une concentration de moins de 100 ppm dans le mélange de pétrole et d'eau.

33. Procédé selon l'une quelconque des revendications 1 à 24, dans lequel le composé est ajouté à une concentration de moins de 50 ppm dans le mélange de pétrole et d'eau.

34. Procédé selon l'une quelconque des revendications 29 à 33, dans lequel le composé comprend en outre de l'acide acétique.

35. Procédé selon la revendication 34, dans lequel le composé comprend en outre moins de 200 ppm d'acide acétique.

36. Procédé selon l'une quelconque des revendications 24 à 33, dans lequel le composé est fourni en l'absence d'acide acétique.

37. Procédé selon l'une quelconque des revendications précédentes, dans lequel l'étape d'addition du composé comprend l'injection du composé en fond de trou.

38. Procédé selon la revendication 1, dans lequel le composé est ajouté avant une duse, un collecteur, une tourelle ou une combinaison de ceux-ci.

39. Procédé selon l'une quelconque des revendications précédentes, comprenant en outre :
ajouter le composé au moment où le mélange de pétrole et d'eau est produit à partir d'une formation.

40. Procédé selon l'une quelconque des revendications précédentes, dans lequel le pétrole possède un TAN supérieur à 0,05.

41. Procédé selon l'une quelconque des revendications précédentes, dans lequel le composé est un acide.

42. Procédé selon l'une quelconque des revendications précédentes, dans lequel le composé forme une interface mixte.

43. Procédé selon l'une quelconque des revendications précédentes comprenant :
introduire le composé dans un conduit comprenant un mélange s'écoulant d'eau à teneur en cation et d'un pétrole à teneur en acide organique.

44. Procédé selon la revendication 43, dans lequel le conduit est choisi parmi un train de forage, un gainage, une colonne de montée de haute mer, un pipeline de transport, un tuyau de traitement et les combinaisons de ceux-ci.

45. Procédé selon la revendication 43 ou la revendication 44, dans lequel le composé est introduit par injection dans le conduit.

46. Procédé selon la revendication 43 ou la revendication 44, dans lequel le composé est introduit dans le conduit par injection dans une formation contenant du pétrole qui est en communication fluide avec le conduit.

47. Procédé selon l'une quelconque des revendications précédentes, dans lequel le mélange d'eau et de pétrole est un fluide de production de pétrole.
